# EUROPEAN PATENT APPLICATION

(11) **EP 4 425 779 A1**
(43) Date of publication of application: **04.09.2024**
(21) Application number: 23212759.7
(22) Date of filing: 28.11.2023
(51) Int. Cl.: H02M 3/158, H02M 1/00

(54) **PHASE CURRENT BALANCE ARCHITECTURE FOR A MULTI-PHASE POWER CONVERTER**

(30) Priority: 02.03.2023 US 202318177426
(71) Applicant: INTEL Corporation, Santa Clara, CA 95054 (US)
(72) Inventor: CHEN, Keng, 01720 Acton (US); XU, Shunjiang, 95035 Milpitas (US); SCHAEF, Christopher, 92127 San Diego (US); SALUS, Tamir, Zichron (IL); JOSHI, Kishan, 95391 Mountain House (US); RAGHAVAN, Arvind, 02420 Lexington (US); ZHANG, Huanhuan, 01721 Ashland (US)
(74) Representative: HGF

(57) **Abstract**

Embodiments described herein may include apparatus, systems, techniques, and/or processes that are directed to multiphase power converters and how current level outputs of each phase circuit are calibrated. The multiple phase circuits are grouped into multiple subsets, wherein one phase circuit of each subset is designated as a reference phase circuit. The reference phase circuits of each subset are calibrated together, using, for example, a closed loop daisy chain technique where each reference phase circuit calibrates their current output to the current output of the previous phase circuit, or alternatively, a current averaging technique where each reference phase circuit balances their current output to the average output of the reference phase circuits. The other phase circuits in each subset calibrate their current level outputs to the reference phase circuits in their subset using, for example, an open loop daisy chain technique, a reference/follower technique or by calibrating their output to the average output of the reference phase circuits.

## Description

### Technical Field

Embodiments of the present disclosure generally relate to the field of computing, in particular, to multi-phase voltage converters in high-performance computing (HPC) systems.

### Background

High-performance computing (HPC) is a technique of processing massive amounts of data and performing complex calculations at high speeds. HPC systems utilize many graphics processing units (GPUs) to perform these complex calculations. A GPU is a specialized processing engine with enhanced mathematical computation capability, making it ideal for HPC applications. Systems with a large number of processing engines need power converters that can supply a higher amount of current while operating at lower voltages. Multi-phase power converters are often used to deliver large amounts of current and obtain higher efficiency and lower output ripple voltage. As computing systems become more complex, the number of required phase circuits in power converters will increase, introducing multiple design issues including pulse width modulation (PWM) mismatches, return impedance mismatches, and inductor variation. All these issues will lead to current imbalance between phase circuits and require new phase balancing techniques.

Phase and current balancing for up to ten phases is common and straight forward. New more complex computing systems will require an extremely large number of phases that need to be balanced to address current needs of HPC GPU products. In the coming years, the number of phases will grow further due to advances in cooling technology for HPC (such as immersion cooling) which will allow higher power levels. The industry is increasingly looking for solutions which can control a large number of phase circuits within a power supply while minimizing current imbalance between such a large number of phase circuits.

A previous current balancing technique includes using the average current of all the phases as the reference for each phase to regulate current. Every phase reports its current and generates the average value. The reference current is maintained at a stable level in this architecture when certain phases are shut off. The time for achieving average information is proportional to the number of phases. The larger the number of phases, the longer time for the system to calculate the average current information. If there is a systematic offset between the average sensing circuit and self-phase current reading, then the phase will chase to a never-reached current target. The adjustment will be saturated.

Another previous current balancing technique includes using a reference-follower type of architecture for phase current balancing. There is a reference phase in the system, and it will broadcast its current to all the phases. Each phase will regulate its own current compared to the reference phase current. The current of each phase will reference to the reference phase. In a system with a large number of phases, system stability may be difficult to maintain. If the current of the reference phase needs to be broadcasted through a long phase chain, then the delay will form a pole causing oscillation.

Another previous current balancing technique includes using a daisy-chain type of architecture for phase current balancing. Each phase reports its current to the next phase. The last phase will close the loop by sending its current to the first phase. For a system with a large number of phases, the delay caused by each phase will lead to a chasing effect between each phase creating an unstable system.

A power converter solution is needed that will maintain system stability and produce a large amount of current while supporting a very large number of phases.

### Brief Description Of The Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Fig. 1 illustrates a computing system in accordance with various embodiments.
Fig. 2 illustrates another computing system in accordance with various embodiments.
Fig. 3 illustrates a phase-current balance architecture in accordance with various embodiments.
Fig. 4 illustrates another phase-current balance architecture in accordance with various embodiments.
Fig. 5 illustrates another phase-current balance architecture in accordance with various embodiments.
Fig. 6 illustrates another phase-current balance architecture in accordance with various embodiments.
Fig. 7 illustrates a phase-current balance architecture printed circuit board layout in accordance with various embodiments.
Fig. 8 illustrates a flow diagram of phase-current balance architecture in accordance with various embodiments.

### Detailed Description

Embodiments described herein may include apparatus, systems, techniques, and/or processes that are directed to multiphase power converters and how current level outputs of each phase circuit are calibrated. The multiple phase circuits are grouped into multiple subsets, wherein one phase circuit of each subset is designated as a reference phase circuit. The reference phase circuits of each subset are calibrated together, using, for example, a closed loop daisy chain technique where each reference phase circuit calibrates their current level output to the current level output of the previous phase circuit, or alternatively, a current averaging technique where each reference phase circuit calibrates their current level output to the average output of the reference phase circuits. The other phase circuits in each subset calibrate their current level outputs to the reference phases in their subset using, for example, an open loop daisy chain technique, a reference/follower technique or by calibrating their current level output to the average current level output of the reference phase circuits.

In the following description, various aspects of the illustrative implementations will be described using terms commonly employed by those skilled in the art to convey the substance of their work to others skilled in the art. However, it will be apparent to those skilled in the art that embodiments of the present disclosure may be practiced with only some of the described aspects. For purposes of explanation, specific numbers, materials, and configurations are set forth in order to provide a thorough understanding of the illustrative implementations. It will be apparent to one skilled in the art that embodiments of the present disclosure may be practiced without the specific details. In other instances, well-known features are omitted or simplified in order not to obscure the illustrative implementations.

In the following detailed description, reference is made to the accompanying drawings that form a part hereof, wherein like numerals designate like parts throughout, and in which is shown by way of illustration embodiments in which the subject matter of the present disclosure may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or more elements are in direct contact.

As used herein, the term "module" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable components that provide the described functionality.

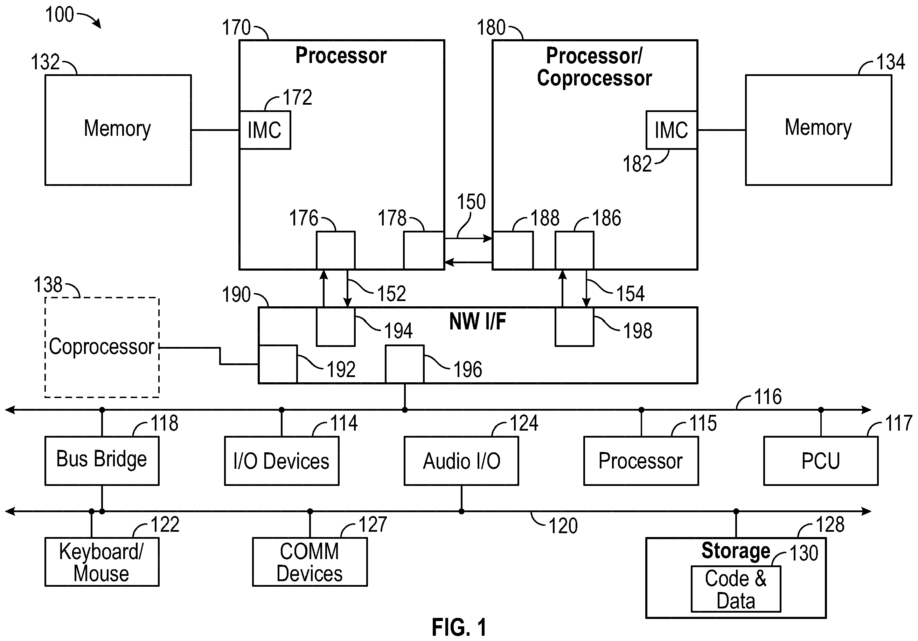

Fig. 1 is a diagram showing a computing system in accordance with various embodiments. Fig. 1 illustrates a computing system in accordance with various embodiments. Multiprocessor system 100 is an interfaced system and includes a plurality of processors or cores including a first processor 170 and a second processor 180 coupled via an interface 150 such as a point-to-point (P-P) interconnect, a fabric, and/or bus. In some examples, the first processor 170 and the second processor 180 are homogeneous. In some examples, first processor 170 and the second processor 180 are heterogeneous. Though the example system 100 is shown to have two processors, the system may have three or more processors, or may be a single processor system. In some examples, the computing system is a system on a chip (SoC).

Processors 170 and 180 are shown including integrated memory controller (IMC) circuitry 172 and 182, respectively. Processor 170 also includes interface circuits 176 and 178; similarly, second processor 180 includes interface circuits 186 and 188. Processors 170, 180 may exchange information via the interface 150 using interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a network interface (NW I/F) 190 via individual interfaces 152, 154 using interface circuits 176, 194, 186, 198. The network interface 190 (e.g., one or more of an interconnect, bus, and/or fabric, and in some examples is a chipset) may optionally exchange information with a coprocessor 138 via an interface circuit 192. In some examples, the coprocessor 138 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 170, 180 or outside of both processors, yet connected with the processors via an interface such as P-P interconnect, such that either or both processors' local cache information may be stored in the shared cache if a processor is placed into a low power mode.

Network interface 190 may be coupled to a first interface 116 via interface circuit 196. In some examples, first interface 116 may be an interface such as a Peripheral Component Interconnect (PCI) interconnect, a PCI Express interconnect or another I/O interconnect. In some examples, first interface 116 is coupled to a power control unit (PCU) 117, which may include circuitry, software, and/or firmware to perform power management operations with regard to the processors 170, 180 and/or co-processor 138. PCU 117 provides control information to a voltage regulator (not shown) to cause the voltage regulator to generate the appropriate regulated voltage. PCU 117 also provides control information to control the operating voltage generated. In various examples, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other examples, power management operations to be performed by PCU 117 may be implemented externally to a processor, such as by way of a separate power management integrated circuit (PMIC) or another component external to the processor. In yet other examples, power management operations to be performed by PCU 117 may be implemented within BIOS or other system software.

Various I/O devices 114 may be coupled to first interface 116, along with a bus bridge 118 which couples first interface 116 to a second interface 120. In some examples, one or more additional processor(s) 115, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 116. In some examples, second interface 120 may be a low pin count (LPC) interface. Various devices may be coupled to second interface 120 including, for example, a keyboard and/or mouse 122, communication devices 127 and storage circuitry 128. Storage circuitry 128 may be one or more non-transitory machine-readable storage media as described below, such as a disk drive or other mass storage device which may include instructions/code and data 130. Further, an audio I/O 124 may be coupled to second interface 120. Note that other architectures than the point-to-point architecture described above are possible. For example, instead of the point-to-point architecture, a system such as multiprocessor system 100 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

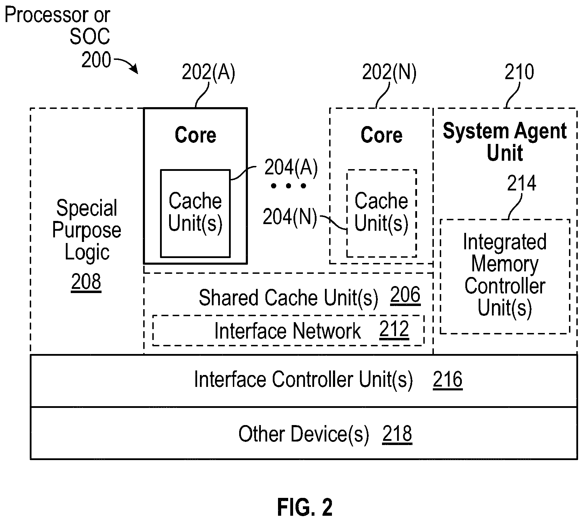

Fig. 2 illustrates another computing system in accordance with various embodiments. An SoC 200 that may have one or more cores and an integrated memory controller. The solid lined boxes illustrate an SoC 200 with a single core 202(A), system agent unit circuitry 210, and a set of one or more interface controller unit(s) circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interface controller units circuitry 216. Note that the processor 200 may be one of the processors 170 or 180, or co-processor 138 or 115 of Fig. 1.

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 204(A)-(N) within the cores 202(A)-(N), a set of one or more shared cache unit(s) circuitry 206, and external memory (not shown) coupled to the set of integrated memory controller unit(s) circuitry 214. The set of one or more shared cache unit(s) circuitry 206 may include one or more mid-level caches, such as level 2 (L2), level 3 (L3), level 4 (L4), or other levels of cache, such as a last level cache (LLC), and/or combinations thereof. While in some examples interface network circuitry 212 (e.g., a ring interconnect) interfaces the special purpose logic 208 (e.g., integrated graphics logic), the set of shared cache unit(s) circuitry 206, and the system agent unit circuitry 210, alternative examples use any number of well-known techniques for interfacing such units. In some examples, coherency is maintained between one or more of the shared cache unit(s) circuitry 206 and cores 202(A)-(N). In some examples, interface controller units circuitry 216 couple the cores 202 to one or more other devices 218 such as one or more I/O devices, storage, one or more communication devices (e.g., wireless networking, wired networking, etc.), etc.

In some examples, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous in terms of instruction set architecture (ISA). Alternatively, the cores 202(A)-(N) may be heterogeneous in terms of ISA; that is, a subset of the cores 202(A)-(N) may be capable of executing an ISA, while other cores may be capable of executing only a subset of that ISA or another ISA.

Computing systems 100 and 200 are example computing systems that may benefit from various embodiments of multiphase power converters. A multiphase regulator has higher efficiency and faster transient response than a single regulator of equivalent power. A multiphase design consists of several single regulator stages connected in parallel driving a common load. Each regulator stage may have its own inductor and power metal oxide silicon field effect transistors (MOSFETs), but the input and output capacitors are shared. Multiphase regulators use voltage-mode or current-mode pulse width modulation (PWM) techniques to balance the output of the multiple phases. A multiphase regulator has several advantages over single phase designs including reduced input and output capacitances, better thermal performance and efficiency with high loads, and better response to load transients.

For use in HPC systems, the number of computing engines may be quite large requiring significant power and current, requiring a power converter with many phases, that is, in the tens or hundreds of phases. Note that the techniques described herein are applicable to many implementations including integrated and discrete voltage converter implementations. According to various embodiments, a hierarchical implementation for current tuning may be used by dividing all of the phases into groups with each group having a reference phase. Reference phases calibrate to each other, using for example, a current averaging or a closed loop daisy-chain technique between the group reference phases in accordance with various embodiments. Further, a reference-follower technique, an average current technique, or an open-loop daisy-chain technique may be used within each group for balancing phase outputs in accordance with various embodiments. Accordingly, any systematic offset is reduced or eliminated. By using the techniques described herein, error among the reference phases may be reduced or eliminated. Further, as the loop is more stable, the requirement for special layout, routing, and other considerations are reduced, lowering design effort and cost. According to various embodiments, the techniques described herein provide for easily scalable designs for large systems resulting in reduced analysis and implementation effort.

According to various embodiments, the design of a power converter phase is well known and thus each phase is represented as a block in figures herein. In addition, various logic such as capacitors, inductors and resistors are not shown for simplicity, but their placement is well known and would not be omitted in actual designs.

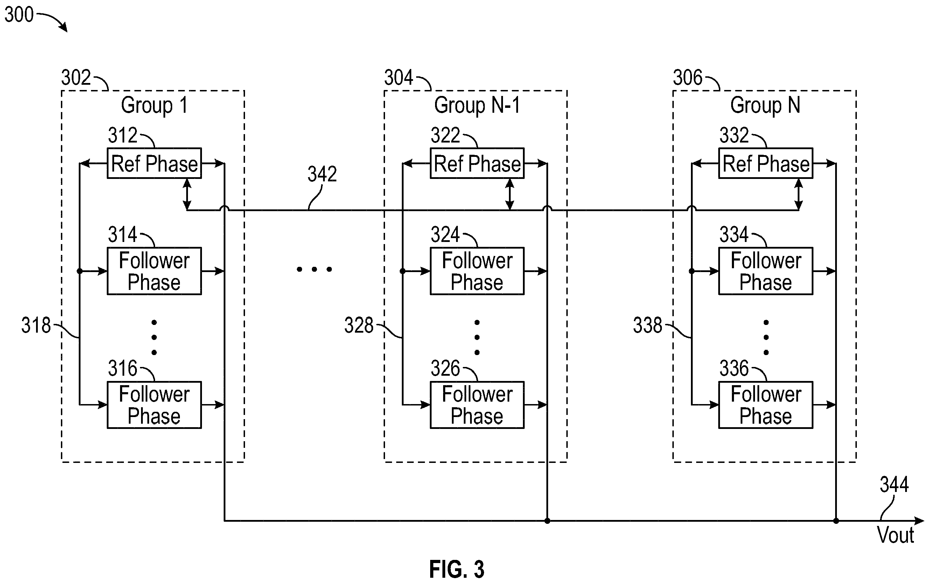

Fig. 3 illustrates a phase-current balance architecture in accordance with various embodiments. Architecture 300 illustrates multiple groupings of phase circuits (hereinafter referred to as "phase" or "phases"), Groups 1 through N-1 and N, groups 302, 304, and 306 respectively. Each phase circuit includes a calibration input and a current level output. The calibration input is used by the phase circuit to adjust and calibrate the phase circuit's current level output. Group 302 (Group 1) includes a reference phase 312 and multiple follower phases, follower phase 314 through follower phase 316. Group 304 (Group N-1) includes a reference phase 322 and multiple follower phases, follower phase 324 through follower phase 326. Group 306 (Group N) includes a reference phase 332 and multiple follower phases, follower phase 334 through follower phase 336. The reference phase of each group is calibrated using the average current 342. Average current 342 is the average of the current level outputs of reference phases 312, through 322 and 324. Reference phase 312 sends its current level to follower phases 314 through follower phase 316 via reference phase current signal 318 for calibration. Reference phase 322 sends its current level to follower phases 324 through follower phase 326 via reference phase current signal 328 for calibration. Reference phase 332 sends its current level to follower phases 334 through follower phase 336 via reference phase current signal 338 for calibration. Each of the follower phases tune their pulse width modulation (PWM) pulse width based on the difference between their current and the received current information from their reference phase. The current level outputs of all phases are combined as illustrated by signal Vout 344.

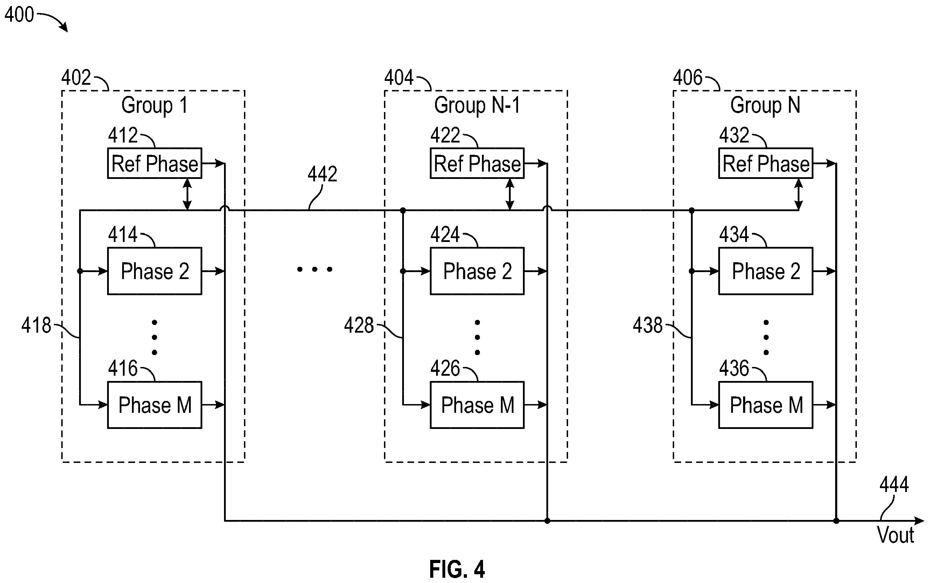

Fig. 4 illustrates another phase-current balance architecture in accordance with various embodiments. Architecture 400 illustrates multiple groupings of phases, Groups 1 through N-1 and N, groups 402, 404, and 406 respectively. Group 402 (Group 1) includes a reference phase 412 and multiple other phases, phase 414 (Group 1, Phase 2) through phase 416 (Group 1, Phase M). Group 404 (Group N-1) includes a reference phase 422 and multiple other phases, phase 424 (Group N-1, Phase 2) through phase 426 (Group N-1, Phase M). Group 406 (Group N) includes a reference phase 432 and multiple other phases, phase 434 (Group N, Phase 2) through phase 436 (Group N, Phase M). Reference phases 412 through 422 and 432 calibrate their current to the average current of all reference phases, average current information signal 442. The average current information signal 442 is also sent to all of the other phases in each group (phase 414 through phase 416 of group 402, phase 424 through phase 426 of group 404, and phase 434 through phase 436 of group 406) to adjust their PWM width and calibrate their output. The outputs of all phases are combined as illustrated by signal Vout 444.

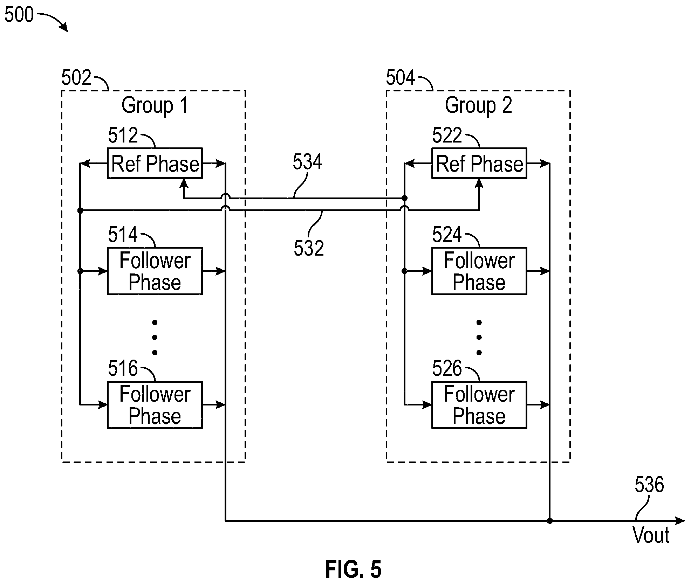

Fig. 5 illustrates another phase-current balance architecture in accordance with various embodiments. Architecture 500 illustrates multiple groupings of phases, group 502 (Group 1) and group 504 (Group 2). Group 502 (Group 1) includes a reference phase 512 and multiple follower phases, phase 514 through follower phase 516. Group 504 includes a reference phase 522 and multiple follower phases, phase 524 through phase 526. Reference phases 512 and 522 are calibrated using a closed loop daisy-chain architecture where reference phase 512 sends its current output information via reference phase current signal 532 to reference phase 522 and reference phase 522 sends it current output information via reference phase current signal 534 to reference phase 512. Reference phase 512 sends its current information to follower phase 514 through follower phase 516 and reference phase 522 sends its current information to follower phase 524 through follower phase 526 for calibration. The outputs of all phases are combined as illustrated by signal Vout 536.

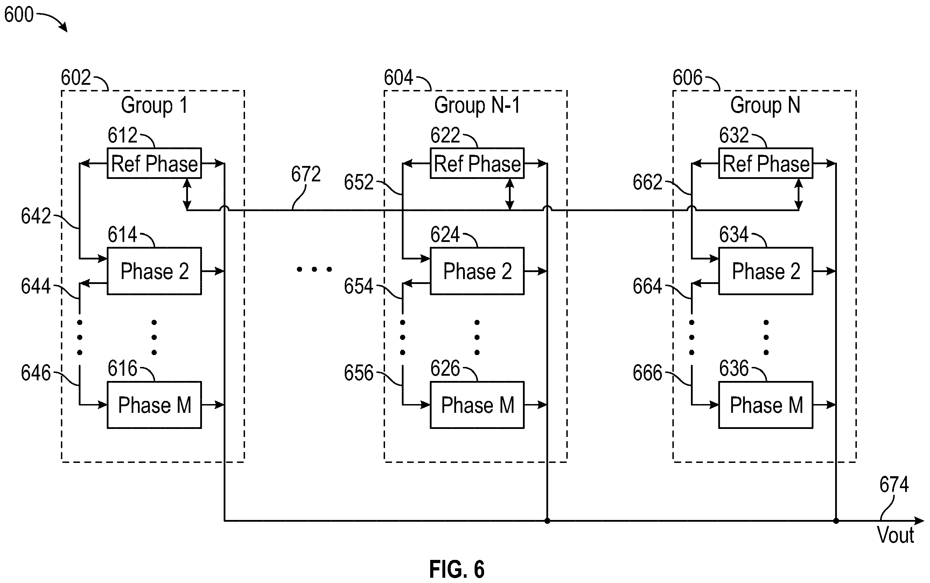

Fig. 6 illustrates another phase-current balance architecture in accordance with various embodiments. Architecture 600 illustrates multiple groupings of phases, Groups 1 through N-1 and N, groups 602, 604, and 606 respectively. Group 602 (Group 1) includes a reference phase 612 and multiple other phases, phase 614 through 616. Group 604 (Group N-1) includes a reference phase 622 and multiple other phases, phase 624 through phase 626. Group 606 (Group N) includes a reference phase 632 and multiple other phases, phase 634 through phase 636. The reference phase of each group is calibrated using the average current line 672 among reference phases 612, through 622 and 632. Reference phase 612 sends its current level 642 to phase 614 for calibration. Likewise, phase 614 sends its current level 644 to the next phase (not shown). Throughout the phases in group 602, the current level is sent to the next phase in a daisy chain fashion through current level 646 sent to phase 616 for calibration. The last phase 616 in group 602 does not send its current level on, making an open loop daisy chain. Reference phase 622 sends its current level 652 to phase 624 for calibration. Likewise, phase 624 sends its current level 654 to the next phase (not shown). Throughout the phases in group 604, the current level is sent to the next phase in a daisy chain fashion through current level 656 sent to phase 626 for calibration. The last phase 626 in group 604 does not send its current level on, making an open loop daisy chain. Reference phase 632 sends its current level 662 to phase 634 for calibration. Likewise, phase 634 sends its current level 664 to the next phase (not shown). Throughout the phases of group 606, the current level is sent to the next phase in a daisy chain fashion through current level 666 sent to phase 636 for calibration. The last phase 636 in group 606 does not send its current level on, making an open loop daisy chain. The outputs of all phases are combined as illustrated by signal Vout 674.

According to various embodiments, by using the modified daisy chain structure, architecture 600 is more stable and is less likely to have oscillation than traditional closed loop daisy chains.

According to various embodiments, the number of phases in a certain group may be limited to around 20 phases. With this structure, the architecture may be optimized with speed and accuracy and be less likely to have oscillation.

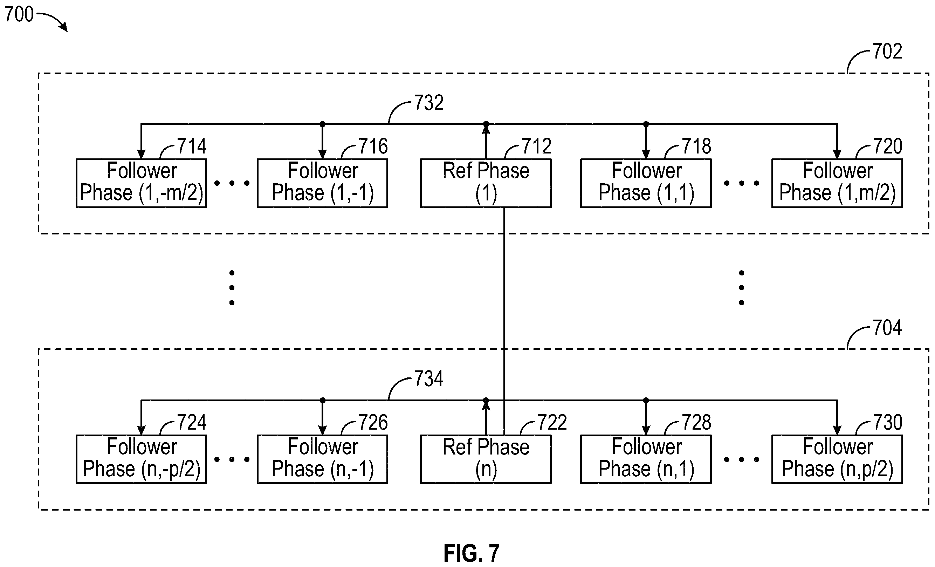

Fig. 7 illustrates a phase-current balance architecture printed circuit board (PCB) layout in accordance with various embodiments. Layout 700 shows a reference/follower configuration with a first group 702 including reference phase 712 and follower phase 714 (Group 1, phase -m/2) through follower phase 716 (Group 1, phase -1) and follower phase 718 (Group 1, phase 1) through follower phase 720 (Group 1, phase m/2). Layout 700 further includes multiple groups through group 704 (Group n). Group 704 includes a reference phase 722 and follower phase 724 (Group n, phase -p/2) through follower phase 726 (Group n, phase -1) and follower phase 728 (Group n, phase 1) through follower phase 730 (Group n, phase p/2). Reference phase 712 sends its current level 732 to the follower phases in Group 1 for calibration. Reference phase 722 sends its current level 734 to the follower phases in Group n for calibration. Layout 700 has reference phases 712 and 722 located centrally on the PCB layout, each surrounded by the follower phases in its group, thereby minimizing delay of the reference phase current level sent to the follower phases.

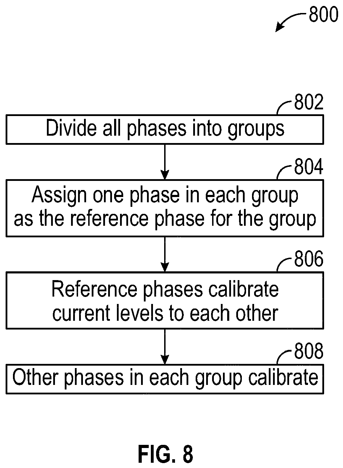

Fig. 8 illustrates a flow diagram of phase-current balance architecture in accordance with various embodiments. Flow 800 begins with dividing all phases into groups, block 802. One phase in each group is designated the reference phase for the group, block 804. The reference phases in each group calibrate their current levels to the other reference phases, block 806. The calibration method for the reference phases may be via current averaging as seen in Figs. 3, 4 and 6, or alternatively via closed-loop daisy chain technique as illustrated in Fig. 5. The other phases in each group are calibrated, block 808. The calibration method for the remaining phases may be via a reference follower method as shown in Figs. 3 and 5, via receiving and calibrating to the average current from the reference phases in each group as shown in Fig. 4, or via an open loop daisy chain method as shown in Fig. 6.

Various embodiments may include any suitable combination of the above- described embodiments including alternative (or) embodiments of embodiments that are described in conjunctive form (and) above (e.g., the "and" may be "and/or"). Furthermore, some embodiments may include one or more articles of manufacture (e.g., non-transitory computer- readable media) having instructions, stored thereon, that when executed result in actions of any of the above-described embodiments. Moreover, some embodiments may include apparatuses or systems having any suitable means for carrying out the various operations of the above-described embodiments.

The above description of illustrated embodiments, including what is described in the Abstract, is not intended to be exhaustive or to limit embodiments to the precise forms disclosed. While specific embodiments are described herein for illustrative purposes, various equivalent modifications are possible within the scope of the embodiments, as those skilled in the relevant art will recognize.

These modifications may be made to the embodiments in light of the above detailed description. The terms used in the following claims should not be construed to limit the embodiments to the specific implementations disclosed in the specification and the claims. Rather, the scope of the invention is to be determined entirely by the following claims, which are to be construed in accordance with established doctrines of claim interpretation.

### EXAMPLES

The following examples pertain to further embodiments. An example may be an apparatus, comprising a first set of power converter phase circuits, the first set of phase circuits including a first reference phase circuit and other first set phase circuits; and a second set of power converter phase circuits, the second set of phase circuits including a second reference phase circuit and other second set phase circuits; wherein the first reference phase circuit is electrically coupled to the second reference phase circuit for calibration; wherein the other first set phase circuits are electrically coupled to the first reference phase circuit for calibration and the other second set phase circuits are electrically coupled to the second reference phase circuit for calibration.

An example may include wherein a current level output of the first reference phase circuit is electrically coupled to a calibration input of the second reference phase circuit and a current level output of the second reference phase circuit is electrically coupled to a calibration input of the first reference phase circuit.

An example may include wherein an average current of a current level output of the first reference phase circuit and a current level output of the second reference phase circuit is electrically coupled to a calibration input of the first reference phase circuit and a calibration input of the second reference phase circuit.

An example may include wherein the average current of the current level output of the first reference phase circuit and the current level output of the second reference phase circuit is electrically coupled to calibration inputs of the other first set phase circuits and calibration inputs of the other second set phase circuits.

An example may include wherein a current level output of the first reference phase circuit is electrically coupled to calibration inputs of the other first set phase circuits and a current level output of the second reference phase circuit is electrically coupled to calibration inputs of the other second set phase circuits.

An example may include wherein a current level output of one phase circuit of the other first set phase circuits is electrically coupled to a calibration input of another phase circuit of the other first set phase circuits.

An example may include wherein the first reference phase circuit and the second reference phase circuit are located centrally on a printed circuit board, the first reference phase circuit surrounded by the other first set phase circuits and the second reference phase circuit surrounded by the other second set phase circuits.

An example may further include multiple processing engines; wherein the first set of power converter phase circuits and the second set of power converter phase circuits to supply current to the multiple processing engines.

An example may include a method comprising grouping phase circuits into a first set of phase circuits and a second set of phase circuits; the first set of phase circuits including a first reference phase circuit and other first set phase circuits and the second set of phase circuits including a second reference phase circuit and other second set phase circuits; calibrating a current level output of the first reference phase circuit to a current level output of the second reference phase circuit; calibrating the current level output of the second reference phase circuit to the current level output of the first reference phase circuit; calibrating current level outputs of the other first set phase circuits to the current level output of the first reference phase circuit; and calibrating current level outputs of the other second set phase circuits to the current level output of the second reference phase circuit.

An example may include wherein the calibrating the current level output of the first reference phase circuit to the current level output of the second reference phase circuit includes using a closed loop daisy chain, wherein the current level output of the first reference phase circuit is received by a calibration input of the second reference phase circuit and the current level output of the second reference phase circuit is received by a calibration input of the first reference phase circuit.

An example may include wherein the calibrating the current level output of the first reference phase circuit to the current level output of the second reference phase circuit includes sending an average current of the current level output of the first reference phase circuit and the current level output of the second reference phase circuit to a calibration input of the first reference phase circuit and to a calibration input of the second reference phase circuit.

An example may include wherein the calibrating the current level outputs of the other first set phase circuits to the current level output of the first reference phase circuit includes sending the average current of the current level output of the first reference phase circuit and the current level output of the second reference phase circuit to calibration inputs of the other first set phase circuits and to calibration input of the other second set phase circuits.

An example may include wherein the calibrating the current level outputs of the other first set phase circuits to the current level output of the first reference phase circuit includes the other first set phase circuits receiving the current level output of the first reference phase circuit.

An example may include wherein the calibrating the current level outputs of the other first set phase circuits to the current level output of the first reference phase circuit includes using an open loop daisy chain of the current level outputs of the other first set phases.

An example may include at least one machine-readable medium comprising a plurality of instructions which, when executed on a computing device cause the computing device to: group phase circuits into a first set of phase circuits and a second set of phase circuits; the first set of phase circuits including a first reference phase circuit and other first set phase circuits and the second set of phase circuits including a second reference phase circuit and other second set phase circuits; calibrate a current level output of the first reference phase circuit to a current level output of the second reference phase circuit; calibrate the current level output of the second reference phase circuit to the current level output of the first reference phase circuit; calibrate current level outputs of the other first set phase circuits to the current level output of the first reference phase circuit; and calibrate current level outputs of the other second set phase circuits to the current level output of the second reference phase circuit.

An example may include wherein to calibrate the current level output of the first reference phase circuit to the current level output of the second reference phase circuit includes further instructions which, when executed on the computing device cause the computing device to use a closed loop daisy chain, wherein the current level output of the first reference phase circuit is received by a calibration input of the second reference phase circuit and the current level output of the second reference phase circuit is received by a calibration input of the first reference phase circuit.

An example may include wherein to calibrate the current level output of the first reference phase circuit to the current level output of the second reference phase circuit includes further instructions which, when executed on the computing device cause the computing device to send an average current of the current level output of the first reference phase circuit and the current level output of the second reference phase circuit to a calibration input of the first reference phase circuit and to a calibration input of the second reference phase circuit.

An example may include wherein the calibrating the current level outputs of the other first set phase circuits to the current level output of the first reference phase circuit includes additional instructions which, when executed on the computing device cause the computing device to send to the average current of the current level output of the first reference phase circuit and the current level output of the second reference phase circuit to calibration inputs of the other first set phase circuits and to calibration inputs of the other second set phase circuits.

An example may include wherein to calibrate the current level outputs of the other first set phase circuits to the current level output of the first reference phase circuit includes further instructions which, when executed on the computing device cause the computing device to cause the other first set phase circuits to receive the current level output of the first reference phase circuit.

An example may include wherein to calibrate the current level outputs of the other first set phase circuits to the current level output of the first reference phase circuit includes further instructions which, when executed on the computing device cause the computing device to use an open loop daisy chain of the current level outputs of the other first set phases.

Another example may include an apparatus comprising means to perform one or more elements of a method described in or related to any of examples herein, or any other method or process described herein.

Another example may include an apparatus comprising: means for grouping phase circuits into a first set of phase circuits and a second set of phase circuits; the first set of phase circuits including a first reference phase circuit and other first set phase circuits and the second set of phase circuits including a second reference phase circuit and other second set phase circuits; means for calibrating a current level output of the first reference phase circuit to a current level output of the second reference phase circuit; means for calibrating the current level output of the second reference phase circuit to the current level output of the first reference phase circuit; means for calibrating current level outputs of the other first set phase circuits to the current level output of the first reference phase circuit; and means for calibrating current level outputs of the other second set phase circuits to the current level output of the second reference phase circuit.

Another example may include wherein the means for calibrating the current level output of the first reference phase circuit to the current level output of the second reference phase circuit includes means for using a closed loop daisy chain, wherein the current level output of the first reference phase circuit is received by a calibration input of the second reference phase circuit and the current level output of the second reference phase circuit is received by a calibration input of the first reference phase circuit.

Another example may include wherein the means for calibrating the current level output of the first reference phase circuit to the current level output of the second reference phase circuit includes means for sending an average current of the current level output of the first reference phase circuit and the current level output of the second reference phase circuit to a calibration input of the first reference phase circuit and to a calibration input of the second reference phase circuit.

Another example may include wherein the means for calibrating the current level outputs of the other first set phase circuits to the current level output of the first reference phase circuit includes means for sending the average current of the current level output of the first reference phase circuit and the current level output of the second reference phase circuit to calibration inputs of the other first set phase circuits and to calibration input of the other second set phase circuits.

Another example may include wherein the means for calibrating the current level outputs of the other first set phase circuits to the current level output of the first reference phase circuit includes the other first set phase circuits means for receiving the current level output of the first reference phase circuit.

Another example may include wherein the means for calibrating the current level outputs of the other first set phase circuits to the current level output of the first reference phase circuit includes means for using an open loop daisy chain of the current level outputs of the other first set phases.

Another example may include one or more non-transitory computer-readable media comprising instructions to cause an electronic device, upon execution of the instructions by one or more processors of the electronic device, to perform one or more elements of a method described in or related to any of examples herein, or any other method or process described herein.

Another example may include an apparatus comprising logic, modules, or circuitry to perform one or more elements of a method described in or related to any of examples herein, or any other method or process described herein.

Another example may include a method, technique, or process as described in or related to any of examples herein, or portions or parts thereof.

Another example may include an apparatus comprising: one or more processors and one or more computer readable media comprising instructions that, when executed by the one or more processors, cause the one or more processors to perform the method, techniques, or process as described in or related to any of examples herein, or portions thereof.

Another example may include a signal as described in or related to any of examples herein, or portions or parts thereof.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SoC or other processor, is to configure the SoC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. An apparatus comprising:
a first set of power converter phase circuits, the first set of power converter phase circuits including a first reference phase circuit and other first set phase circuits; and
a second set of power converter phase circuits, the second set of power converter phase circuits including a second reference phase circuit and other second set phase circuits;
wherein the first reference phase circuit is electrically coupled to the second reference phase circuit for calibration;
wherein the other first set phase circuits are electrically coupled to the first reference phase circuit for calibration and the other second set phase circuits are electrically coupled to the second reference phase circuit for calibration.

2. The apparatus of claim 1, wherein a current level output of the first reference phase circuit is electrically coupled to a calibration input of the second reference phase circuit and a current level output of the second reference phase circuit is electrically coupled to a calibration input of the first reference phase circuit.

3. The apparatus of claim 1, wherein an average current of a current level output of the first reference phase circuit and a current level output of the second reference phase circuit is electrically coupled to a calibration input of the first reference phase circuit and a calibration input of the second reference phase circuit.

4. The apparatus of claim 3, wherein the average current of the current level output of the first reference phase circuit and the current level output of the second reference phase circuit is electrically coupled to calibration inputs of the other first set phase circuits and calibration inputs of the other second set phase circuits.

5. The apparatus of claim 1, wherein a current level output of the first reference phase circuit is electrically coupled to calibration inputs of the other first set phase circuits and a current level output of the second reference phase circuit is electrically coupled to calibration inputs of the other second set phase circuits.

6. The apparatus of claim 1, wherein a current level output of one phase circuit of the other first set phase circuits is electrically coupled to a calibration input of another phase circuit of the other first set phase circuits.

7. The apparatus of any one of claims 1-6, wherein the first reference phase circuit and the second reference phase circuit are located centrally on a printed circuit board, the first reference phase circuit surrounded by the other first set phase circuits and the second reference phase circuit surrounded by the other second set phase circuits.

8. The apparatus of any one of claims 1-7, further comprising:
multiple processing engines;
wherein the first set of power converter phase circuits and the second set of power converter phase circuits to supply current to the multiple processing engines.

9. A method comprising:
grouping phase circuits into a first set of phase circuits and a second set of phase circuits; the first set of phase circuits including a first reference phase circuit and other first set phase circuits and the second set of phase circuits including a second reference phase circuit and other second set phase circuits;
calibrating a current level output of the first reference phase circuit to a current level output of the second reference phase circuit;
calibrating the current level output of the second reference phase circuit to the current level output of the first reference phase circuit;
calibrating current level outputs of the other first set phase circuits to the current level output of the first reference phase circuit; and
calibrating current level outputs of the other second set phase circuits to the current level output of the second reference phase circuit.

10. The method of claim 9, wherein the calibrating the current level output of the first reference phase circuit to the current level output of the second reference phase circuit includes using a closed loop daisy chain, wherein the current level output of the first reference phase circuit is received by a calibration input of the second reference phase circuit and the current level output of the second reference phase circuit is received by a calibration input of the first reference phase circuit.

11. The method of claim 9, wherein the calibrating the current level output of the first reference phase circuit to the current level output of the second reference phase circuit includes sending an average current of the current level output of the first reference phase circuit and the current level output of the second reference phase circuit to a calibration input of the first reference phase circuit and to a calibration input of the second reference phase circuit.

12. The method of claim 11, wherein the calibrating the current level outputs of the other first set phase circuits to the current level output of the first reference phase circuit includes sending the average current of the current level output of the first reference phase circuit and the current level output of the second reference phase circuit to calibration inputs of the other first set phase circuits and to calibration input of the other second set phase circuits.

13. The method of any one of claims 9-11, wherein the calibrating the current level outputs of the other first set phase circuits to the current level output of the first reference phase circuit includes the other first set phase circuits receiving the current level output of the first reference phase circuit.

14. A computer-readable storage medium including computer-readable instructions, when executed, to implement a method as claimed in any one of claims 9 to 13.

15. An apparatus comprising means to perform a method as claimed in any one of claims 9-13.
